Europäisches Patentamt

European Patent Office

Office européen des brevets

(11) Publication number: **0 295 019**
**A1**

# (12) EUROPEAN PATENT APPLICATION

(21) Application number: 88305104.7

(22) Date of filing: 03.06.88

(51) Int. Cl.4: **C01B 33/28** , //B01J29/06

(30) Priority: 08.06.87 US 59368

(43) Date of publication of application:
14.12.88 Bulletin 88/50

(84) Designated Contracting States:
AT BE DE FR GB IT NL SE

(71) Applicant: MOBIL OIL CORPORATION
150 East 42nd Street
New York New York 10017(US)

(72) Inventor: **Chang, Clarence Dayton**
**11 Murray Place**
**Princeton New Jersey 08540(US)**
Inventor: **Han, Scott**
**4 Valerie Lane**
**Lawrenceville New Jersey 08648(US)**
Inventor: **Shihabi, David Said 8 Mooresmill Mt.**
**Rose Road, RR1 Box 259 A1**
**Hopewell New Jersey 08534(US)**

(74) Representative: **Colmer, Stephen Gary**
**Patent Department c/o Mobil Services**
**Company Limited Mobil Court 3 Clements**
**Inn**
**London WC2A 2EB(GB)**

(54) Treatment of aluminosilicate zeolites.

(57) The degree of crystallinity of an aluminosilicate zeolite having a silica-to-alumina mole ratio less than 100 is enhanced by contacting the zeolite in the absence of an external source of aluminum with an aqueous fluoride solution having a pH of 3 to 7 under conditions sufficient to remove amorphous material from the zeolite.

EP 0 295 019 A1

## TREATMENT OF ALUMINOSILICATE ZEOLITES

This invention relates to the treatment of aluminosilicate zeolites to enhance their crystallinity.

A vast number of naturally-occurring and synthetic aluminosilicate zeolites are known. Among the more commercially important zeolites are zeolite Y (U.S. Patent No. 3,130,007), zeolite beta (U.A. Patent No. 3,308,069 reissued as RE 28 341) and ZSM-5 (U.S. Patent No. 3,702,886).

The silica-to-alumina ratio of a zeolite is often variable; for example, zeolite Y can be synthesized with a silica-to-alumina ratio ranging from 3 to about 6. In some zeolites, for example ZSM-5, the upper limit of silica-to-alumina ratio is virtually unbounded. Thus U.S. Patent No. 3,941,871 discloses a crystalline zeolite essentially free of aluminum and exhibiting an X-ray diffraction pattern characteristic of ZSM-5. Similarly, U.S. Patent Nos. 4,061,724, 4,073,865 and 4,104,294 describe microporous crystalline silicates or organosilicates in which the aluminum content is at impurity levels.

Because of the extremely low aluminum content of these highly siliceous zeolites, their ion exchange capacity is correspondingly low. Therefore, when exchanged and processed in conventional manner, they are not as catalytically active as their higher aluminum-containing counterparts. To overcome this problem, it is known from, for example, EP-A-134326 to enhance the catalytic activity of a high silica zeolite by a post-synthesis treatment involving combining the zeolite with an inorganic oxide matrix such as alumina, and then contacting the resultant catalyst with an aqueous solution of a monovalent fluoride such as ammonium fluoride, at 0-100°C for up to one hour. On conversion of the zeolite to its protonated form, the catalyst is found to have a higher acid activity than the untreated catalyst.

It is also known from US-A-4,415,544 to tailor the catalytic activity of a zeolite by loading the pores of the zeolite with paraffin wax and then contacting the zeolite with a 0.005-0.5N hydrogen fluoride solution at 20-35°C for 1-10 hours. Such a hydrogen fluoride solution would inherently have a pH below 2.5.

U.S. Patent No. 3,933,893 described a method of increasing the thermal stability of a zeolite, such as zeolite X or Y, by contacting the zeolite in an alkali metal form with a dilute solution of a fluorine compound, preferably ammonium fluorosilicate, at 15-70°C and a slurry pH of 3-11 and then exchanging the alkali metal ions in the fluoride-treated zeolite with ammonium, rare earth, alkaline earth or transition metal ions until the alkali content of the zeolite is less than 6% by weight calculated as the alkali oxide.

It is further known from, for example, U.S. Patent No. 3,326,797 to treat aluminosilicate zeolites having a silica-to-alumina mole ratio of 6 to 12 with an aqueous caustic solution having a pH above 10.5 to remove silica from the zeolite. In this way, it is found that a slight increase in apparent crystallinity can be obtained, but the treatment conditions must be closely controlled so as to avoid destruction of the crystal structure of the zeolite.

It has now been found that the crystallinity of an aluminosilicate zeolite having a silica-to-alumina mole ratio less than 100 can be enhanced by treating the unbound zeolite with an aqueous fluoride solution under carefully controlled acidic pH conditions. In this respect, it is to be appreciated that, when synthesized, a crystalline zeolite will inherently tend to contain some amorphous material and it is an object of the present invention to reduce the amount of this amorphous material. The enhanced crystallinity of the treated zeolite can be measured in conventional manner by X-ray diffraction, in which the heights of one or more peaks in the diffraction pattern of the untreated sample of the zeolite are compared with the heights of identical peaks in the patterns of the treated zeolite.

According to the invention, there is provided a method of treating an aluminosilicate zeolite having a silica-to-alumina mole ratio less than 100 and containing amorphous material, comprising the step of contacting the zeolite in the absence of an external source of aluminum with an aqueous fluoride solution having a pH of 3 to 7 under conditions sufficient to remove amorphous material from the zeolite and thereby increase the X-ray crystallinity of the zeolite.

The reason why the treatment of the invention is effective to increase the crystallinity of a zeolite is unclear. However, one possible explanation is that extra-lattice amorphous silicate and/or aluminate material in the crystalline zeolite is made soluble by reaction with the fluoride ions. A second possible explanation is that the zeolite crystal framework may contain defect sites which are healed by the transport of extra-lattice silicon and/or aluminum to the lattice using fluoride ions in the solution. Irrespective of the mechanism of the crystallinity improvement, it is found that the treatment can be conducted without the zeolite exhibiting loss of catalytic activity at least as measured by its hexane cracking activity.

In the accompanying drawings, Figures 1A and B are the X-ray diffractions patterns of a USY sample before and after treatment according to one example of the invention respectively;

Figures 2A and B are X-ray diffraction patterns of an ultrastable Y (USY)/silica extrudate before and after treatment according to said one example;

Figures 3A and B are X-ray diffraction patterns of zeolite beta before and after treatment according to said one example; and

Figures 4A and B are X-ray diffraction patterns of a ZSM-5 sample before and after treatment according to a further example of the invention respectively.

The method of the invention can be used to treat any crystalline zeolite having a silica-to-alumina mole ratio less than 100 and containing at least some amorphous material, typically non-framework aluminum- or silicon-containing material remaining after synthesis of the zeolite. Preferred zeolites are zeolite Y, especially ultrastable Y, and zeolites having a Constraint Index of 1-12 when tested at a temperature in the range of 290-538°C (see U.S. Patent No. 4,016,218), particularly zeolite beta and ZSM-5. To avoid unwanted side reactions, the treatment is conducted in the absence of an external source of aluminum and in particular in the absence of an alumina-containing binder. Thus, if it is required to combine the zeolite with a binder, a binder free of labile aluminum, e.g. silica, should be used or the binder should be combined with the zeolite after the treatment process of the invention.

The aqueous fluoride solution used in the present treament process is produced from the simple fluoride species, $MF_n$, where M is hydrogen, a metal of valence n, and/or is the ammonium cation. Preferably, the fluoride species is ammonium hydrogen fluoride ($NH_4F.HF$).

The fluoride ion concentration in the aqueous fluoride solution is not critical but, where ammonium fluoride is used, the preferred concentration is 0.01 to 2 Normal. It is, however, important that the pH of the aqueous fluoride solution is in the range of 3 to 7 so as to ensure removal of amorphous material without adversely affecting the structural integrity of the crystalline silicate. Where the zeolite is particularly sensitive to acid, such as zeolite Y, it is preferred that the pH of the fluoride solution is in the range of 5 to 7.

The treatment should be effected under mild conditions so as to avoid loss of lattice material and preferably at a temperature of 0-100°C for 1 to 24 hours. Using the present treatment process it has been found to be possible to increase the crystallinity of ultrastable Y up to 10% for the pure zeolite and up to 6% for an extrudate of ultrastable Y and silica. For zeolite beta, an improvement of up to 5% has been obtained and for ZSM-5 an improvement of approximately 7%.

Zeolites treated in accordance with the invention can be used in a wide variety of catalytic applications such as, for example, hydrocarbon cracking, dewaxing, and conversion of methanol to gasoline.

The invention will now be more particularly described with reference to the following Examples.

## EXAMPLE 1

The following treatment was applied to the ammonium form of ultrastable Y (silica-to-alumina ratio 10-15), both alone and as an extrudate with 35% by weight of silica, and zeolite beta (silica-to-alumina ratio 35-45). To 100 ml of a solution 3.4 M in ammonium acetate were added 3g of the zeolite. This mixture was slurried and heated to 75°C, after which 50 ml of a solution 0.02 M in $NH_4F$ and 0.04 M in HF (having pH of 2-4) were added to the slurry in one ml increments over two hours. The resultant mixture (having pH of 6-7) was stirred and allowed to react overnight at 75°C, whereafter the mixture was filtered and the zeolite product was exchanged with ammonium nitrate solution and calcined.

The unsmoothed X-ray powder diffraction patterns for each of the treated and untreated samples are given in Figures 1 to 3. In the ultrastable Y patterns, the six strongest peaks between 15° and 32° 2-theta (d-spacing 6.0-2.7 Angstrom) were averaged and compared for the treated product and the untreated parent. For the USY alone (Figure 1) the crystallinity of the product of 109% of the parent and for the USY/silica extrudate (Figure 2) the crystallinity of the product was 106% of the parent. In the case of zeolite beta (Figure 3) the major peak between 22° and 23° 2-theta (d-spacing 4.0-3.8 Angstrom) was used and the crystallinity of the treated product was found to be 105% of the parent.

## EXAMPLE 2

In a plastic container 1g of $NH_4$ ZSM-5 (silica-to-alumina ratio 70) was slurried with 14 ml of water and 11 ml of a solution 0.44 M in HF and 0.22 in $NH_4F$ having a pH of 3-4. The reaction mixture was heated to 85°C and left to digest overnight. The product zeolite was then filtered, exchanged with ammonium nitrated solution and calcined.

Figure 4 gives the unsmoothed X-ray diffraction patterns for the parent and treated ZSM-5 samples. Using the average of the five strongest peaks in the 23-25° 2-theta range (d-spacing 4.0-3.5 Angstrom), the treated zeolite exhibited 107% crystallinity compared with parent.

## Claims

1. A method of treating an aluminosilicate zeolite having a silica-to-alumina mole ratio less than 100 and containing amorphous material, comprising the step of contacting the zeolite in the absence of an external source of aluminum with an aqueous fluoride solution having a pH of 3 to 7 under condition sufficient to remove amorphous material from the zeolite and thereby increase the X-ray crystallinity of the zeolite.

2. The method of claim 1 wherein said solution contains the fluoride $MF_n$, where M is a metal of valence n, hydrogen and/or $NH_4^+$.

3. The method of claim 2 wherein the solution contains ammonium fluoride.

4. The method of claim 3 wherein the concentration of the ammonium fluoride in the solution is 0.01 to 2N.

5. The method of claim 1 wherein said contacting is effected at a temperature of 0-100°C for 1 to 24 hours.

6. The method of claim 1 wherein the zeolite is ultrastable Y.

7. The method of claim 6 wherein the pH of the aqueous fluoride solution is in the range 5 to 7.

8. The method of claim 1 wherein the zeolite is ZSM-5.

9. The method of claim 1 wherein the zeolite is zeolite beta.

| | DOCUMENTS CONSIDERED TO BE RELEVANT | | EP 88305104.7 |
|---|---|---|---|

| Category | Citation of document with indication, where appropriate, of relevant passages | Relevant to claim | CLASSIFICATION OF THE APPLICATION (Int. Cl 4) |
|---|---|---|---|
| X | US - A - 4 596 704 (MIALE et al.) <br> * Claims; example * <br> -- | 1-3,8 | C 01 B 33/28// <br> B 01 J 29/06 |
| X | US - A - 4 670 614 (USHIO et al.) <br> * Claims; examples * <br> ---- | 1-3,8 | |

**TECHNICAL FIELDS SEARCHED (Int. Cl.4)**

C 01 B

B 01 J

C 07 C

The present search report has been drawn up for all claims

| Place of search | Date of completion of the search | Examiner |
|---|---|---|
| VIENNA | 15-09-1988 | PAMMINGER |